# EUROPEAN PATENT APPLICATION

(11) **EP 2 979 590 A1**
(43) Date of publication of application: **03.02.2016**
(21) Application number: 15179302.3
(22) Date of filing: 31.07.2015
(51) Int. Cl.: A47G 7/08

(54) **DEVICE FOR MAINTAINING SOIL MOISTURE IN PLANT VASES**

(30) Priority: 01.08.2014 IT FI20140183; 12.09.2014 IT FI20140208
(71) Applicant: Parrini, Massimiliano, 57037 Portoferraio (IT); Manfanetti, Roberto, 57123 Livorno (IT)
(72) Inventor: Parrini, Massimiliano, 57037 Portoferraio (IT); Manfanetti, Roberto, 57123 Livorno (IT)
(74) Representative: Valenza, Silvia

(57) **Abstract**

The present invention describes a device for taking care of plants, in particular for avoiding the overheating thereof due to solar radiation, and therefore for contributing to maintaining the right moisture of the soil of potted plants.

## Description

### FIELD OF THE INVENTION

The present invention refers to the field of devices for taking care of plants, in particular for avoiding the overheating thereof due to solar radiation, and therefore for contributing to maintaining the right moisture of the soil of potted plants.

### STATE OF THE ART

Watering potted plants both in apartments and those in flowerpots outside homes is a rather boring and at times thankless task - especially in the hot, dry months when plants often require large quantities of water, in particular if they have many leaves with a large surface which therefore induce significant transpiration and therefore the operation is to be carried out practically every day, at times several times a day. Furthermore, watering cannot even be divided throughout the day because as is known, it is better to wait for the coolest hours of the evening and/or morning to water plants - especially if they are potted or are exposed to the sun - not to mention the fact that the hot months normally coincide with vacation periods and therefore with more or less extended absences from homes.

To overcome the aforesaid drawbacks, several solutions have been resorted to, such as for example irrigation systems equipped with timers for setting watering times, or gel or zirconite pellets, or other material capable of retaining significant quantities of water while releasing it a little at a time, but these solutions are rather complicated and often not very satisfactory on their own because if hit by sunrays during the hottest hours of the day, flower vases and flowerpots overheat excessively, thus making it impossible to keep the proper daily moisture of the soil, even if it is watered regularly.

The aforesaid problems are likewise more burdensome in the case of potted cultivations in nursery gardens.

The interest is therefore apparent to make available a simple and affordable device which allows excessive overheating to be avoided of flower vases and flowerpots exposed to the sun.

### SUMMARY OF THE INVENTION

The present invention solves the aforesaid problems by means of a device (50) made of thermal insulation and reflecting material (51) and having:
- a shape adapted to surround the side walls of a flower vase; said shape formed by a single portion or several portions of thermal insulation and reflecting material;
- at least one lateral end comprising lateral engagement means (52) adapted to close the device on itself and thus surround the side walls of the vase.

Surprisingly, the walls of the vase covered with the thermal insulation and reflecting material allows the potting compost to maintain coolness and moisture for an extended time, thus reducing the suffering of the plant and the roots thereof following direct exposure to the sun; furthermore, the appearance of the vase is improved in light of the metal color provided by the reflecting and thermal insulation material. The reduced suffering of the plants induces a decreased water consumption due to watering and, on a large scale (for example, for nursery garden systems), this can involve a drastic reduction of management costs, especially in summer months.

The object of the present invention is likewise a flower vase the side walls of which are covered with a thermal insulation and reflecting material or covered with a device according to the invention.

The object of the present invention is likewise a method for protecting a flower vase from the radiation and overheating of sunbeams; said method comprising covering the side walls of a vase with a thermal insulation and reflecting material or with a device according to the invention.

The object of the present invention is also a kit comprising at least one flower vase and a device according to the invention, having measurement and shape adapted to cover the side walls of said vase.

### BRIEF DESCRIPTION OF THE DRAWINGS

FIG. 1 shows a device (50) according to the invention, prepared to be positioned external to a flower vase.
FIG. 2 shows a flower vase with flowers, said vase covered with a device (50) according to the invention.
FIG. 3 shows the device according to the invention in an "open" state.
FIG. 4 shows pictures of the experiment of comparative survival of a series of plants of the same variety in two different vases, exposed to the same daytime exposure to the sun, one vase without the device according to the invention and the other vase protected by the device (50) according to the invention; A) shows the plants at the beginning of the experiment; B) shows the plants at the end of the second day of the experiment.
FIG. 5 shows another embodiment of the device according to the invention in an "open" state.
FIG. 6 shows the picture of the embodiment in fig. 5.

### DETAILED DESCRIPTION OF THE INVENTION

The thermal insulation and reflecting material of which the device according to the invention is made is a multi-material comprising:
- a metallized PET or PPL outer film;
- an intermediate layer with a high insulation coefficient.

Such material is used to make, for example, cool bags for transporting frozen foods. The metallized outer film allows the reflection of the sunrays and this at least partly reduces the heating power thereof. The intermediate layer with a high insulation coefficient allows maintaining a cooler temperature on the vase side with respect to the outside irradiated by the sun. The intermediate layer with a high insulation coefficient is preferably of expanded material which optionally comprises a plurality of eutectic gel strips or, in one embodiment, said intermediate layer with a high insulation coefficient consists entirely of an eutectic gel.

The lateral engagement means (52) is preferably a double sided adhesive strip. If the device is equipped with two engagement means (52 and 53) which are reciprocally engageable with each other and are arranged at the two lateral ends of the device, said engagement means (52 and 53) can consist of adhesive strips, Velcro, snap fasteners and laces.

In a preferred embodiment, the device of the invention also comprises top engagement means adapted to secure the top edge of the device to the top edge of the vase.

To secure the device to the top edge of the vase, the top engagement means can be, for example, a plurality of foldable supports (54) arranged spaced from each other on the top edges adapted to fold the top edge of the device towards the inside of the vase, or an elastic or a string to be tied, which is passed in a specific hem prepared in the top edge of the device, or rings through which a string or an elastic is passed can be allocated on the top edge of the device, or the top edge can include a double sided adhesive strip to be attached to the top edge of the vase, or the device can be equipped with rods to be secured to the top edge of the device and passing from one top edge of the vase to the other.

Preferably, to be secured to the top edge of the vase, the device according to the invention is equipped with a plurality of foldable supports which preferably consist of metal strips or wires; said foldable supports can be inserted between the layers of the reflecting and thermal insulation material or applied to one of the surfaces of such a material.

Preferably, the dimensions in height of the device object of the invention exceed the height of the vase such as to allow the top edge (56) of the device folded towards the inside of the vase past the top edge of the vase to provide thermal insulation and shading to the potting compost contained in the vase, thus further helping maintain the potting compost and the roots cooler.

The top edge of the device can be folded towards the inside of the vase through the engagement means (for example, foldable supports 54) arranged along the top edge of the device.

The engagement means (for example, foldable supports 54) therefore serve a double purpose: allowing an optimal adaptation of the device to the top edge of the vase, thus promoting the securing thereof, and keeping the top edge of the device oriented towards the inside of the vase.

In an embodiment in which the device according to the invention is formed by a single portion of thermal insulation and reflecting material, the device according to the invention will essentially have a segmented or semicircular shape, which can have different dimensions according to the need to adapt to different shaped vases according to what is available on the market.

Indeed, flower vases or flowerpots essentially in the shape of a parallelepiped, cube or cylinder of various dimensions are on the market.

Preferably, the device according to the invention can include one or more elastic bands (55), which can be arranged in the top portion of the device at the corners of the vase/flowerpot or along the whole top portion of the device, for example in the case of adaptability to a vase/flowerpot being essentially cylindrical in shape.

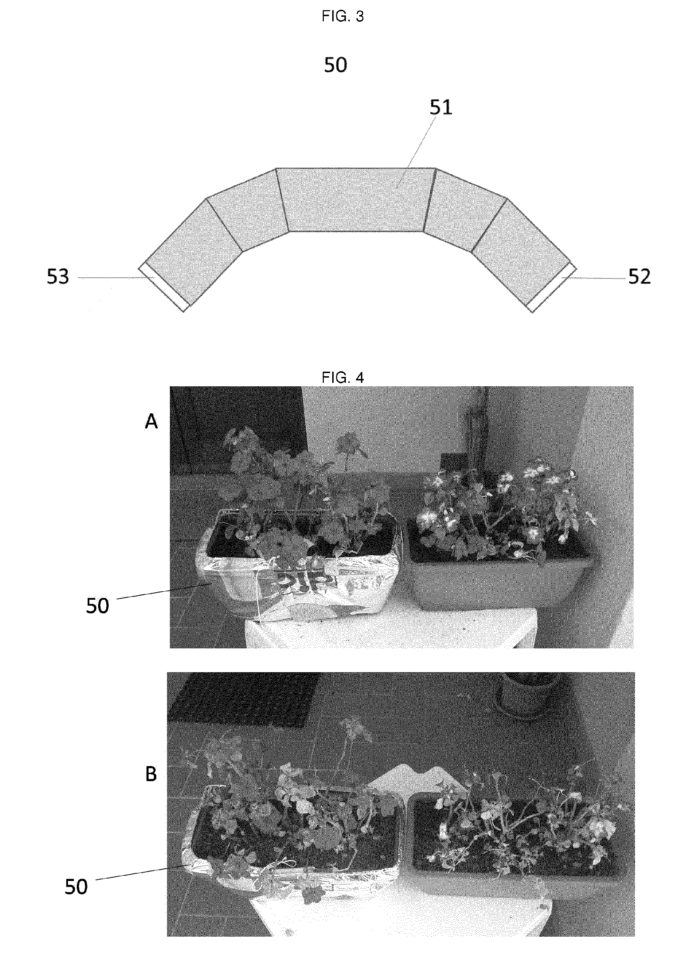

The shape of the device according to the invention can vary according to the geometry of the vase to be covered; hence, for example, for a vase with a rectangular mouth and trapezoidal-shaped side walls, the device according to the invention in an "open" state can be shaped as shown in fig. 3.

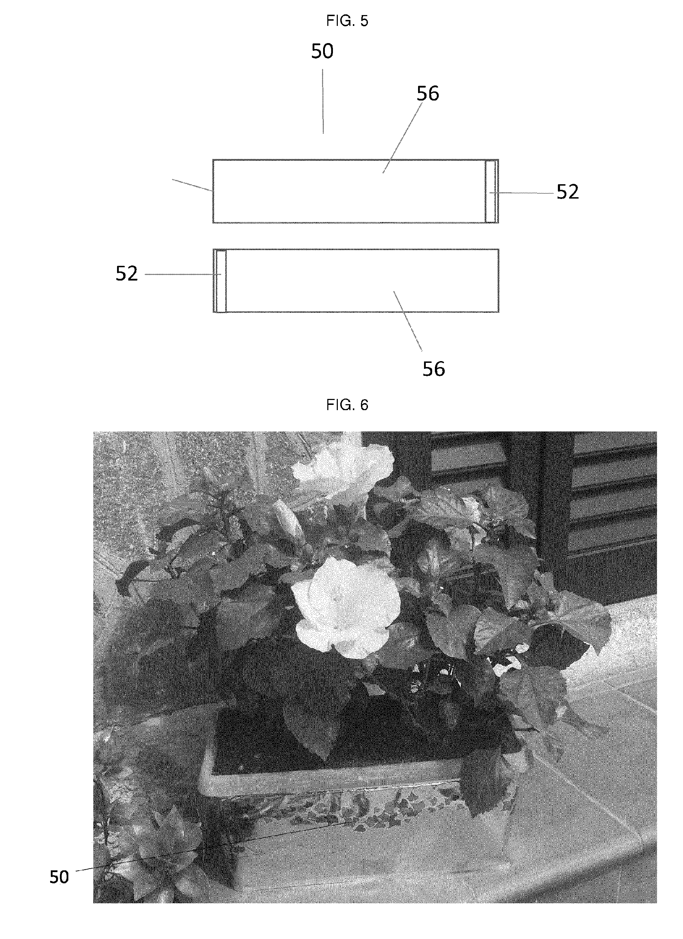

With reference to fig. 5, according to another, particularly preferred embodiment of the invention, the device is formed by two or more portions (56) of thermal insulation and reflecting material, said portions being each rectangular in shape and each portion being equipped with at least one double sided adhesive strip (52) arranged along one of the short ends on the inner side of the device (that is, the side to be directed towards the wall of the vase to be covered), adapted to engage the two or more portions (56) with each other. Preferably, each portion (56) is equipped with two double sided adhesive strips arranged along the two short ends of the rectangle. The device formed by two or more portions of thermal insulation reflecting material is thereby easy to apply and adapt to vases of any shape and dimension. In the case of very large vases, more than two portions of thermal insulation and reflecting material can be used. Preferably, the height (h) of the portions (56) is equal to the height of the outer side wall of the vase, excluding the gutter. In this embodiment, the top edge of the vase remains uncovered and the device is applied to the side walls of the vase by placing it below the gutter of the vase, as shown in figure 6.

A test using a prototype of the device according to the invention revealed how the vase protected with the "prototype" allows the potting compost to remain moister and cooler with respect to the potting compost contained in the unprotected vase, while always maintaining a restrained temperature (below 40 °C). The much higher temperatures (even exceeding 50 °C) in the unprotected vase certainly caused the water introduced initially to evaporate in advance and undergo increased overheating due to direct radiation from the sun.

The test results pointed out that potted plants with adequate protection of the vase obtained by means of a device according to the invention require less water and at the same time undergo less suffering following direct exposure to the sun.

The result is that in addition to a direct benefit for the plant, significant water savings are obtained, which is even more advantageous for nursery garden systems using thousands of liters of water each day to keep their potted plants (generally in black plastic vases) alive and cool.

These water savings are entirely to the advantage of the environment, especially on a large scale, and water consumption due to watering plants could realistically be drastically reduced to approximately 1/3 (one third).

Considering that the daily water consumption of a small nursery garden with approximately 10,000 vases is equal to 4,000-5,000 liters of water a day and considering that due to the extended coolness of the potting compost and of the plants obtained by protecting the vases with devices according to the invention, water consumption could be reduced by 1/3, which over the course of the summer would mean having a total water saving equal to 360,000 liters for the 4 months alone (May, June, July and August), and no less importantly, significant savings could be obtained due to the reduced operation of the pumps (electricity savings). The advantages and benefits described above can be easily obtained because the product object of the invention will have very low production and sales costs (insignificant considering the advantages).

The present invention can be better understood in light of the figures referred to by the description.

### EXPERIMENTAL SECTION

### EXAMPLE 1

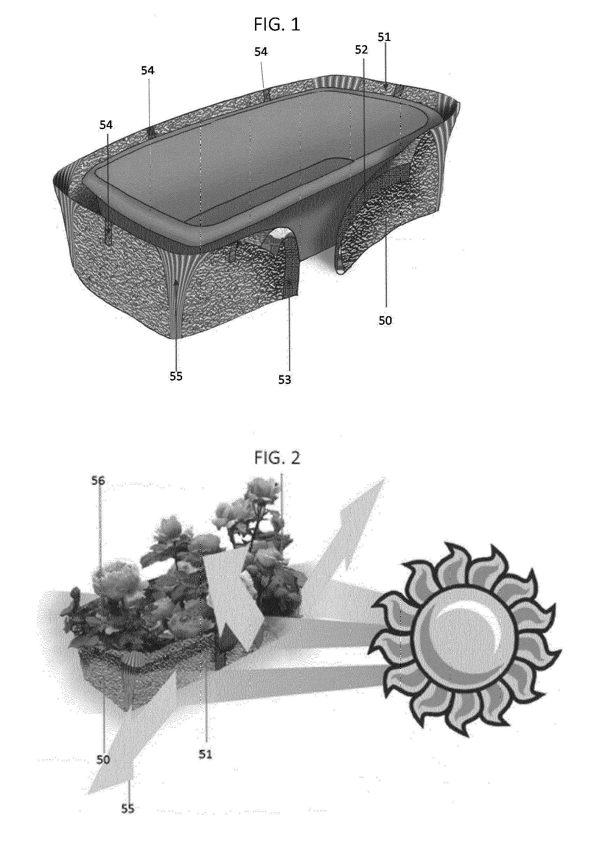

A prototype of the device according to the invention was prepared to adapt to a vase with a rectangular mouth, like the one shown in figures 1 and 2. In the embodiment of the prototype, the top edge of the device was equipped with a hem, inside which a string was passed which, when pulled, could secure the device to the top edge of the vase, and the lateral engagement means were Velcro (as also shown in fig. 3). The prototype was applied to a plastic vase in which three small IMPATIENS (also known as the touch-me-not) plants were planted.

Just as many plants of the same plant variety were planted in an identical vase using the same quantity of the same potting compost.

The two vases were then placed side by side in a sunny place (the vases were directly hit by the sun, in July, from 1:30 pm to 8:00 pm).

The evening of Day 0 the two vases were each watered with 1.5 liters of water (so that the potting compost was sufficiently moist). The next morning (morning of Day 1), each vase was again watered with another 1/2 liter of water.

The internal temperature of the potting compost was measured at different times of two consecutive days of duration of the experiment: Day 1 and Day 2. During the two days of observation, the vases were no longer watered.

### DAY 1

The first measurement of the temperature of the potting compost was taken at 10:00 am on Day 1, with the vases still in the shade (at that time, the potting compost was still sufficiently moist and cool); the temperature was taken using a Sirman digital thermometer (of which we enclose photo 1). The thermometer probe was pushed deep into the potting compost and the temperature was found to be 23.1 °C in both vases.

The second measurement was performed at 2:00 pm, after approximately half an hour of direct exposure to the sun, and a different in temperature between the two vases was immediately detected. Indeed, the potting compost in the vase on which the prototype according to the invention was installed had a temperature of 28.2 °C, while the one without protection had a temperature of 33.5 °C. Other measurements were taken throughout Day 1. At 4:00 pm, the temperature of the vase with the prototype was 30.2 °C and of the vase without the prototype was 37.6 °C, while at 6:00 pm, the temperature of the vase with the prototype was 31.9 °C and of the vase without the prototype was 44.6 °C.

### DAY 2

Multiple temperature measurements of the potting compost in the two vases were repeated on Day 2: the temperatures at 8:30 am, with the vases still in the shade, were in line with the temperatures from the previous day. Indeed, the temperatures taken of the potting compost (which after the night, was still moist) were 22.3 °C in each vase. Although the vases were still in the shade at 10:00 am when the second measurement was taken, a difference of 1.6 °C was detected in favor of the vase on which the prototype was mounted. The difference increased at 2:00 pm; indeed, a temperature of 26.8 °C was taken in the vase with the prototype, and a temperature of 32.4 °C was taken in the one without the prototype. At 4:00 pm, the temperature was 33.1 °C in the one with the prototype and 46.1 °C in the one without the prototype, at 6:00 pm it was 35.6 °C in the one with the prototype and 51.5 °C in the one without the prototype (with a significant difference of 15.9 °C).

It is already apparent on Day 2 how the plants in the vase without the prototype show evident signs of suffering; indeed the plants have flowers with fewer petals and some are already dry, unlike the plants in the vase with the prototype, which were still vital and whose flowers were all in optimal condition.

To provide complete information, below is the table of the temperatures taken:

| | Detaction time | Exposure situation | Temperature | | Difference in temperature |
|---|---|---|---|---|---|
| | | | With prototype | Without prototype | |
| DAY 1 | 10:00 am | shade | 23.1 | 23.1 | 0 |
| | 2:00 pm | half an hour of sun | 28.2 | 33.5 | 5.30 |
| | 4:00 pm | sun | 30.2 | 37.6 | 7.4 |
| | 6:00 pm | sun | 31.9 | 44.6 | 12.7 |
| DAY 2 | 8:30 am | shade | 22.3 | 23.3 | 1 |
| | 10:00 am | shade | 23.3 | 24.9 | 1.6 |
| | 2:00 pm | half an hour of sun | 26.8 | 32.4 | 5.6 |
| | 4:00 pm | sun | 33.1 | 46.1 | 13 |
| | 6:00 pm | sun | 35.6 | 51.5 | 15.9 |
| DAY 3 | 2:00 pm | half an hour of sun | 27.5 | 34.4 | 6.9 |

After 9 days of observation, the plants in the unprotected vase showed strong signs of total deterioration (see photo 4), with no flowers and fewer leaves, while the plants in the protected one were still in good/excellent conditions with vital flowers and leaves.

Neither of the vases were watered any more during the nine days of observation.

## Claims

1. A device (50) made of thermal insulation and reflecting material (51) and having:
- a shape adapted to surround the side walls of a flower vase, said shape consisting of a single portion or several portions of thermal insulation and reflecting material;
- at least one lateral end of said single portion or each of several portions comprising a lateral engagement mean (52) adapted to close the device on itself and thus surround the side walls of the vase.

2. A device according to claim 1, wherein the thermal insulation and reflecting material of which the device is made is a multi-material comprising:
a metallized PET or PPL outer film;
an intermediate layer with a high insulation coefficient.

3. A device according to any one of claims 1-2, wherein the intermediate layer consists of an expanded material, optionally comprising a plurality of eutectic gel strips, or the intermediate layer wholly consists of a eutectic gel.

4. A device according to any one of claims 1-3, formed by two or more portions (56) of thermal insulation and reflecting material, said portions being each rectangular in shape and each portion being equipped with at least one double sided adhesive strip (52) arranged along one of the short ends on the inner side of the device, that is the side to be directed towards the wall of the vase to be covered, adapted to engage the two or more portions (56) with each other.

5. A device according to any one of claims 1-3, formed by a single portion of thermal insulation and reflecting material, said single portion being essentially segmented or semicircular in shape, and comprising two lateral engagement means (52 and 53) which are reciprocally engageable with each other and are respectively arranged at the two lateral ends of the device, said engagement means (52 and 53) being selected in the group consisting of adhesive strips, Velcro, snap fasteners and laces.

6. A device according to any one of claims 1-4, comprising top engagement means adapted to secure the top edge of the device to the top edge of the vase.

7. A device according to claim 5, wherein said top engagement means for securing the device to the top edge of the vase are a plurality of foldable supports (54) arranged spaced from each other on the top edges adapted to fold the top edge of the device towards the inside of the vase, or an elastic or a string to be tied, which is passed in a specific hem prepared in the top edge of the device, or rings through which a string or an elastic is passed may be allocated on the top edge of the device, or the top edge may include a double sided adhesive strip to be attached to the top edge of the vase, or the device may be equipped with rods to be secured to the top edge of the device and passing from one top edge of the vase to the other.

8. A device according to any one of claims 1-6, wherein one or more elastic bands (55) are arranged in the top portion of the device at the corners of the vase/flowerpot or along the whole top part of the device.

9. A method for protecting a flower vase from the radiation and overheating of sunbeams; said method comprising covering the side walls of a vase with a thermal insulation and reflecting material or with a device according to the invention.

10. A kit comprising at least one flower vase and a device according to the invention, having measurement and shape adapted to cover the side walls of said vase.

11. A flower vase covered with a thermal insulation and reflecting material or covered with a device according to the invention.
